# EUROPEAN PATENT APPLICATION

(11) **EP 4 807 870 A1**
(43) Date of publication of application: **16.09.2026**
(21) Application number: 25732309.7
(22) Date of filing: 23.01.2025
(51) Int. Cl.: H01M 50/233, H01M 50/211, H01M 50/105

(54) **BATTERY APPARATUS AND ELECTRICAL DEVICE**

(71) Applicant: Contemporary Amperex Technology Co., Ltd., Ningde, Fujian 352100 (CN)
(72) Inventor: QIAN, Ou, Ningde, Fujian 352100 (CN); ZHENG, Linxin, Ningde, Fujian 352100 (CN); LI, Yao, Ningde, Fujian 352100 (CN); JIANG, Shixin, Ningde, Fujian 352100 (CN)
(74) Representative: Gong, Jinping
(86) International application number: PCT/CN2025/074371
(87) International publication number: WO 2026/156621

(57) **Abstract**

Provided is a battery apparatus including a plurality of pouch battery cells (10) sequentially stacked and electrically connected and a wrapping shell (20) wrapped outside the plurality of pouch battery cells (10) and configured to restrain the plurality of pouch battery cells (10) at least from three directions, a strength of the wrapping shell (20) being higher than a strength of a flexible shell of the pouch battery cell (10), where a thickness of a plate of the wrapping shell (20) for restraining the plurality of pouch battery cells (10) is less than or equal to 5.2 mm and greater than or equal to 0.2 mm.

## Description

### TECHNICAL FIELD

The present application relates to the technical field of batteries, and in particular, to a battery apparatus and an electric device.

### BACKGROUND

In the related art, there is a high difficulty in thermal protection between the adjacent battery sets in the pouch battery apparatus, which affects the further improvement of the reliability of the pouch battery apparatus.

### SUMMARY

The present application aims to solve at least one of the technical problems existing in the prior art. Therefore, an objective of the present application is to provide a battery apparatus and an electric device, where the battery apparatus features higher reliability and better resistance to thermal runaway.

In a first aspect, the present application provides a battery apparatus. The battery apparatus includes a plurality of pouch battery cells and a wrapping shell. The plurality of pouch battery cells are sequentially stacked and electrically connected, the wrapping shell is wrapped outside the plurality of pouch battery cells, the wrapping shell is configured to restrain the plurality of pouch battery cells at least from three directions, and the strength of the wrapping shell is higher than the strength of a flexible shell of the pouch battery cell. The thickness of the plate of the wrapping shell for restraining the plurality of pouch battery cells is less than or equal to 5.2 mm and greater than or equal to 0.2 mm.

According to the battery apparatus in the embodiments of the present application, by allowing the strength of the wrapping shell to be higher than the strength of the flexible shell and the thickness of the wrapping shell to be more reasonable, in one aspect, the structural strength of the wrapping shell can be improved, and the probability of structural damage after the wrapping shell is impacted by the high-pressure gas-fire flow can be reduced, such that the heat diffusion of the pouch battery cell is concentrated inside the wrapping shell, and thereby the probability of heat diffusion outside the wrapping shell is reduced and the reliability of the battery apparatus is enhanced, and in another aspect, the energy density of the battery apparatus can also be taken into account, and the production cost of the battery apparatus can be lowered.

According to some embodiments of the present application, the thickness of the plate of the wrapping shell for restraining the plurality of pouch battery cells is less than or equal to 3 mm and greater than or equal to 0.5 mm.

According to some embodiments of the present application, the thickness of the plate of the wrapping shell for restraining the plurality of pouch battery cells is less than or equal to 1 mm and greater than or equal to 0.6 mm.

According to some embodiments of the present application, the wrapping shell is an aluminum shell, and the thickness of the plate of the wrapping shell for restraining the plurality of pouch battery cells is less than or equal to 1 mm and greater than or equal to 0.4 mm; or the wrapping shell is a stainless steel shell, and the thickness of the plate of the wrapping shell for restraining the plurality of pouch battery cells is less than or equal to 1 mm and greater than or equal to 0.2 mm.

According to some embodiments of the present application, the wrapping shell includes a first plate, a second plate, and a third plate sequentially connected in a bending mode, an opening is formed at a side of the first plate and the third plate facing away from the second plate, the wrapping shell is connected to the case of the battery apparatus through the opening, and the first plate, the second plate, and the third plate restrain the plurality of pouch battery cells along three directions, respectively.

According to some embodiments of the present application, the first plate and the third plate restrain the plurality of pouch battery cells from opposite directions.

According to some embodiments of the present application, the second plate restrains the plurality of pouch battery cells in a direction perpendicular to the direction in which the first plate or the third plate restrains the plurality of pouch battery cells.

According to some embodiments of the present application, the first plate, the second plate, and the third plate form two exposed openings on two sides of a third direction, respectively, each exposed opening is provided with a busbar member for converging the plurality of pouch battery cells, and each busbar member covers the corresponding exposed opening.

According to some embodiments of the present application, the battery apparatus further includes the case, and end surfaces of the first plate and the third plate on a side distal to the second plate are connected to the case through an adhesive layer.

According to some embodiments of the present application, the case is provided with a bottom plate, and the bottom plate is connected to the first plate and the third plate through the adhesive layer.

According to some embodiments of the present application, the bottom plate is configured as a cold plate, and/or the bottom plate is provided with a cold plate on a side facing the plurality of pouch battery cells, and the adhesive layer is located between the cold plate and the plurality of pouch battery cells.

According to some embodiments of the present application, the adhesive layer includes an adhesive layer body and an adhesive overflow part. The adhesive overflow part is located on the adhesive layer body on a side facing the plurality of pouch battery cells, and is located between adjacent pouch battery cells, and/or between the pouch battery cells and the first plate, and/or between the pouch battery cells and the third plate.

According to some embodiments of the present application, the flexible shell is provided with a side surface opposite to a large surface of an electrode assembly and a circumferential surface avoiding the large surface, the side surface and/or the circumferential surface are provided with weak parts, and the wrapping shell is provided with a pressure relief part at least partially opposite to the weak parts.

According to some embodiments of the present application, the pressure relief part is formed on the second plate.

According to some embodiments of the present application, the second plate is spaced apart from a side of the circumferential surface provided with the pressure relief part to define an exhaust channel.

According to some embodiments of the present application, the second plate is configured as a flat plate or an arc-shaped plate.

According to some embodiments of the present application, a plurality of pressure relief parts are provided, and the plurality of pressure relief parts are spaced apart from each other in the length direction and/or the width direction of the second plate.

According to some embodiments of the present application, the total power of the plurality of pouch battery cells in a single wrapping shell is less than 0.9 kWh, and the energy density of the plurality of pouch battery cells in the single wrapping shell satisfies: L ≤ 450 Wh/L.

According to some embodiments of the present application, the total power of the plurality of pouch battery cells in a single wrapping shell is less than 0.72 kWh, and the energy density of the plurality of pouch battery cells in the single wrapping shell satisfies: 450 Wh/L < L ≤ 600 Wh/L.

According to some embodiments of the present application, the total power of the plurality of pouch battery cells in a single wrapping shell is less than 0.6 kWh, and the energy density of the plurality of pouch battery cells in the single wrapping shell satisfies: 600 Wh/L < L ≤ 700 Wh/L.

According to some embodiments of the present application, the total power of the plurality of pouch battery cells in a single wrapping shell is less than 0.48 kWh, and the energy density of the plurality of pouch battery cells in the single wrapping shell satisfies: L > 700 Wh/L.

According to some embodiments of the present application, the pouch battery cell is any one of a lithium iron phosphate battery cell, a ternary lithium battery cell, and a solid-state battery cell.

According to some embodiments of the present application, when the battery cell is a lithium iron phosphate battery cell, in the positive electrode material of the battery cell, the amount ratio of the positive electrode active material, the positive electrode binder, and the positive electrode conductive agent is 96:1-3:1-3; when the battery cell is a ternary lithium battery cell, in the positive electrode material of the battery cell, the amount ratio of the positive electrode active material, the positive electrode binder, and the positive electrode conductive agent is 96:2-3:1-2.

In a second aspect, the present application provides an electric device. The electric device includes the battery apparatus according to the above embodiments.

According to some embodiments of the present application, the electric device is a vehicle.

According to some embodiments of the present application, the battery apparatus is integrated in the chassis of the vehicle, and the top plate of the case participates in defining the floor of the vehicle body.

The additional aspects and the advantages of the present application will be partially provided in the following description, will partially become apparent from the following description, or will be learned through the practice of the present application.

### BRIEF DESCRIPTION OF THE DRAWINGS

The above and/or additional aspects and advantages of the present application will become apparent and readily understood from the description of embodiments in conjunction with the drawings below, in which:
FIG. 1 is a schematic diagram of an electric device according to an embodiment of the present application;
FIG. 2 is an exploded schematic diagram of a battery apparatus according to an embodiment of the present application;
FIG. 3 is a schematic diagram of a battery set according to an embodiment of the present application;
FIG. 4 is a schematic diagram of the cooperation between a battery set and a case according to an embodiment of the present application;
FIG. 5 is a schematic diagram of the cooperation between a busbar member and a battery cell and a wrapping shell according to an embodiment of the present application; and
FIG. 6 is a schematic diagram of a pouch battery cell according to an embodiment of the present application.

### DETAILED DESCRIPTION

The embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the accompanying drawings are exemplary and are only intended to explain the present application. They should not be construed as limiting the scope of the present application.

In the description of the present application, it should be understood that the orientations or positional relationships indicated by the terms "central", "upper", "lower", "front", "rear", "left", "right", "vertical", "horizontal", "top", "bottom", "inner", "outer", and the like are those shown based on the drawing. These terms are only intended to facilitate the description of the present application and simplify the description rather than indicate or imply that the apparatus or element referred to must have a specific orientation or must be constructed and operated in a specific orientation, and thus, should not be construed as limiting the present application.

It should be noted that the terms "first" and "second" are used for descriptive purposes only and should not be construed as indicating or implying relative importance or implicitly indicating the number of technical features described. Therefore, features defined with "first" or "second" may explicitly or implicitly include one or more of the features. Further, in the description of the present application, "a plurality" means two or more, unless otherwise specified.

The battery cell may be a secondary battery, which refers to a battery cell that can continue to be used by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery apparatus described in the embodiments of the present application may include one or more battery sets for providing voltage and capacity. The battery set may include a plurality of battery cells connected in series, in parallel, or in series-parallel by a busbar member.

In some embodiments, the battery set is generally formed by arranging a plurality of battery cells.

In some embodiments, the battery apparatus may be a battery pack. The battery pack includes a case and one or more battery sets, and the battery sets are accommodated in the case.

As an example, the battery set may be a battery module, and the battery set may be accommodated in the case by fixing the battery module in the case.

As an example, the case may include a first case body and a second case body. The first case body and the second case body are snap-fitted to form an enclosed space inside the case, so as to accommodate the battery set. The term "enclosed" here refers to be covered or closed, which may be sealed or unsealed. The first case body may be a top cover or a bottom plate.

As an example, the case may include a top cover, a frame, and a bottom plate. The top cover and the bottom plate are each connected to the frame, such that an enclosed space is formed inside the case to accommodate the battery set.

In some embodiments, the case may be a part of the chassis structure of the vehicle. For example, a part of the case may become at least a part of the floor of the vehicle, or a part of the case may become at least a part of a crossmember and a longitudinal member of the vehicle.

The technical solutions described in the embodiments of the present application are suitable for battery apparatuses and electric devices using battery apparatuses.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

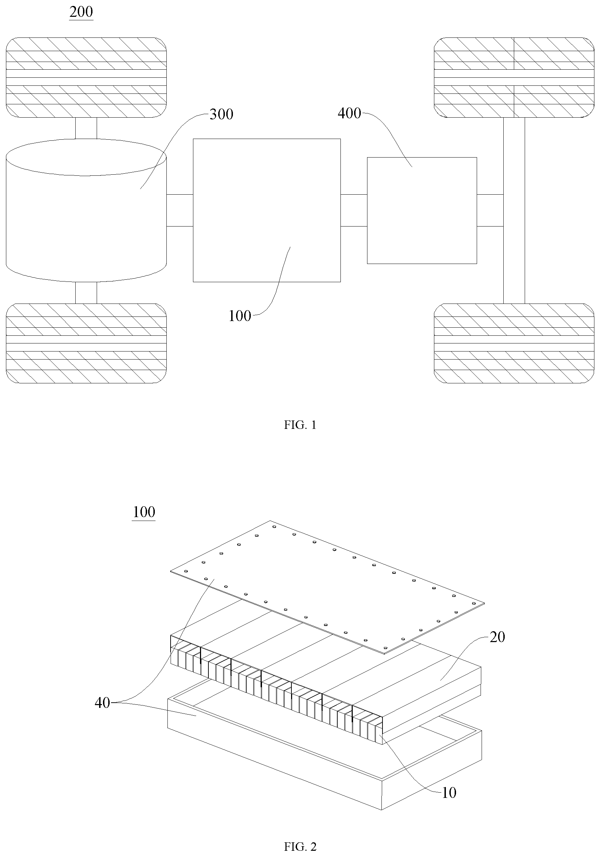

Referring to FIG. 1, FIG. 1 is a schematic structural diagram of a vehicle provided according to some embodiments of the present application. A battery apparatus 100 is disposed inside the vehicle, and the battery apparatus 100 may be disposed at the bottom, head, or tail of the vehicle. The battery apparatus 100 may be used for powering the vehicle. For example, the battery apparatus 100 may serve as an operation power source for the vehicle.

The vehicle may further include a controller 400 and a motor 300. The controller 400 is configured to control the battery apparatus 100 to power the motor 300, and the motor 300 is formed as a load, e.g., for operation power needed by the vehicle for start-up, navigation, and driving.

In some embodiments of the present application, the battery apparatus 100 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of a battery apparatus 100 provided according to some embodiments of the present application. The battery apparatus 100 includes a case 40, and the case 40 is configured to accommodate the battery cells.

The case 40 is a component for accommodating the battery cells, the case 40 provides a storage space for the battery set, and the case 40 may be of a variety of structures. In some embodiments, the case 40 may include a tray and a cover plate. The tray and the cover plate are lidded with each other to define a storage space for accommodating the battery cells. The tray and cover plate may be in various shapes, such as rectangular parallelepiped and cylindrical. The tray may be of a hollow structure with one side open, the cover plate may also be of a hollow structure with one side open, and the open side of the tray is lidded with the open side of the cover plate to form the case 40 with a storage space. The situation may also be that the tray is of a hollow structure with one side open, the cover plate is of a plate-like structure, and the open side of the tray is lidded with the cover plate to form the case 40 with a storage space.

As an example, the battery cell may be a pouch battery cell 10.

In the battery apparatus 100, one or more battery cells may be provided. A plurality of battery cells are loaded together through a wrapping shell 20 to form a battery set, and one or more battery sets are loaded into the case 40. If a plurality of battery cells are provided, the plurality of battery cells may be connected in series, or in parallel, or in series-parallel. The series-parallel connection means that both series connection and parallel connection are present for the connection among the plurality of battery cells. The situation may be a plurality of battery cells are first connected in series, in parallel, or in series-parallel to form a battery set, and then a plurality of battery sets are connected in series, in parallel, or in series-parallel to form a whole and accommodated in the case 40.

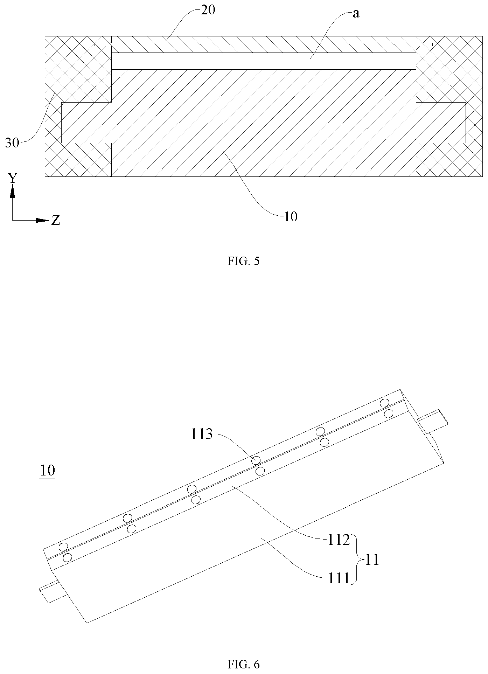

Referring to FIG. 5 and FIG. 6, the battery cell, as the minimum energy unit of the battery apparatus 100, includes a flexible shell 11 and an electrode assembly 12 disposed inside the flexible shell 11.

The internal environment formed by the flexible shell 11 may be used for accommodating the electrode assembly 12, electrolytic solution, and other components. One side of the flexible shell 11 may form an opening for injecting the electrolytic solution and inserting the electrode assembly 12 into the shell.

As shown in FIG. 2, FIG. 3, FIG. 5, and FIG. 6, tabs of the electrode assembly 12 are provided in the flexible shell 11 in a penetrating manner, the tabs are electrically connected to the busbar member 30, and the electrode assembly 12 is a component of the battery cell in which the electrochemical reaction occurs. One or more electrode assemblies 12 may be accommodated within the flexible shell 11. The electrode assembly 12 is mainly formed by winding or laminating a positive electrode plate and a negative electrode plate, and a separation film is usually disposed between the positive electrode plate and the negative electrode plate. The portions of the positive electrode plate and the negative electrode plate that contain the active substance constitute the body part of the electrode assembly 12, and the portions of the positive electrode plate and the negative electrode plate that do not contain the active substance each constitute a tab. The positive electrode tab and the negative electrode tab may be located together at one end of the body part or separately at two ends of the body part. During the charging and discharging process of the battery apparatus 100, the positive electrode active substance and the negative electrode active substance react with the electrolytic solution, and the tabs are connected to the busbar members 30 to form a current circuit.

A positive electrode plate may include a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

As an example, a metal foil or a composite current collector may be used as the positive electrode current collector. For example, for the metal foil, stainless steel, copper, aluminum, nickel, carbon electrode, carbon, nickel, titanium, aluminum or stainless steel treated with silver on the surface, or the like may be used. The composite current collector may include a polymer material base layer and a metal layer. The composite current collector may be fabricated by forming a metal material (aluminum, aluminum alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, when the pouch battery cell 10 in the embodiments of the present application is a lithium-ion battery, the positive electrode active material may include at least one of the following materials: phosphates, layered transition metal oxides and their respective modified compounds; optionally, the positive electrode active material may include layered transition metal oxides and their respective modified compounds, which helps to increase the energy density of the pouch battery cell 10. However, the present application is not limited to these materials, and other traditional materials that can be used as positive electrode film layers for batteries may also be used. These positive electrode active materials may be used alone or in combination of two or more.

Examples of the phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

The layered transition metal oxide includes at least one of a compound with the general formula of LiₐNi_{b}Co_{c}M_{d}OₑA_{f} and modified compounds thereof, where 0.8 ≤ a ≤ 1.2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S, and Cl. Optionally, 0.5 ≤ b < 1, and further optionally, 0.75 ≤ b ≤ 0.98.

Examples of the layered transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), LiNi_{0.9}Co_{0.05}Mn_{0.05}O₂ (also referred to as Ni90)), a lithium nickel cobalt aluminum oxide (such as LiNi_{0.80}Co_{0.15}Al_{0.05}O₂), and modified compounds thereof.

When the pouch battery cell 10 in the embodiments of the present application is a sodium-ion battery, the positive electrode active material may include, but is not limited to, at least one of a sodium-containing transition metal oxide, a polyanionic material (such as phosphate, fluorophosphate, pyrophosphate, and sulfate), and a Prussian blue material.

As an example, the positive electrode active material used for the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials, and materials with general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, where X includes at least one of H+, Li+, Na+, K+, and NH4+, M' is a transition metal cation and is optionally at least one of V, Ti, Mn, Fe, Co, Ni, Cu, and Zn, and Y is a halogen anion and is optionally at least one of F, Cl, and Br.

In the embodiments of the present application, the modified compounds of the above positive electrode active materials may be obtained by doping modification and/or surface-coating modification of the positive electrode active materials, such as carbon-coating modification and fast-ionic conductor coating modification.

The pouch battery cell 10, during the charging and discharging process, undergoes deintercalation and consumption of active ions such as Li, and the molar content of Li varies when the pouch battery cell 10 is discharged to different states. In the examples of the positive electrode active material listed in the embodiments of the present application, the molar content of Li is in an initial state of the material, that is, a state before the material is added, and when the positive electrode active material is applied to a battery system, the molar content of Li may change after charge-discharge cycles.

In the examples of the positive electrode active material listed in the embodiments of the present application, the molar content of oxygen O is only a theoretical value. The molar content of oxygen O will vary due to oxygen release from the crystal lattice, and actually, the molar content of oxygen O will fluctuate.

In the embodiments of the present application, the content of the element in the positive electrode active material has the meaning known in the art and can be detected by using devices and methods known in the art. For example, with reference to EPA 6010D-2014, inductively coupled plasma atomic emission spectrometry is used to determine the content using a plasma atomic emission spectrometer (ICP-OES, model: Thermo ICAP7400). First, 0.4 g of positive electrode active material is taken and weighed, and 10 mL (50% concentration) of aqua regia is added thereto. Then, the mixture is placed on a flat plate at 180 °C and left to stand for 30 min. After digested on the flat plate, the mixture is adjusted to a volume of 100 mL and undergoes a quantitative test by using a standard curve method.

In some embodiments, the foam metal may be used as the positive electrode. The foam metal may be foam nickel, foam copper, foam aluminum, foam alloy, foam carbon, or the like. When the foam metal is used as the positive electrode, the surface of the foam metal may be not provided with the positive electrode film layer. Certainly, the positive electrode film layer may also be provided. As an example, a lithium source material, a potassium metal, or a sodium metal may also be incorporated into or/and deposited in the foam metal; the lithium source material is a lithium metal and/or a lithium-rich material.

In some embodiments, the positive electrode film layer further optionally includes a positive electrode conductive agent. The embodiments of the present application do not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber. In some embodiments, the mass percentage of the positive electrode conductive agent in the positive electrode film layer is ≤ 5 wt%.

In some embodiments, the positive electrode film layer further optionally includes a positive electrode binder. The embodiments of the present application do not particularly limit the type of the positive electrode binder. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some embodiments, the mass percentage of the positive electrode binder in the positive electrode film layer is ≤ 5 wt%.

The positive electrode film layer is generally formed by coating a positive electrode current collector with a positive electrode slurry, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

In some embodiments, the negative electrode may be a negative electrode plate. The negative electrode plate may include a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, the negative electrode active material may be a negative electrode active material known in the art for use in the pouch battery cell 10. As an example, the negative electrode active material may include at least one of the following materials: a carbon material (e.g., at least one of artificial graphite, natural graphite, soft carbon, and hard carbon), a silicon-based material, a tin-based material, lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other traditional materials that can be used as negative electrode film layers for batteries may also be used. These negative electrode film layers may be used alone or in combination of two or more.

In some embodiments, the negative electrode active material includes silicon element. The silicon element may be present in the form of a silicon-based material. For example, the silicon-based material may include at least one of elemental silicon, a silicon-oxygen compound, a silicon-carbon composite, a silicon-nitrogen composite, and a silicon alloy. Due to the introduction of the silicon element, the energy density of the pouch battery cell 10 can be improved.

In some embodiments, the mass content of the silicon element in the negative electrode film layer is 1 wt% to 32 wt%, optionally 2 wt% to 19 wt%, and further optionally 6 wt% to 13 wt%. Under the system of the pouch battery cell 10, when the mass content of the silicon element is within the above range, the energy density of the pouch battery cell 10 can be improved.

In the embodiments of the present application, the mass content of the silicon element in the negative electrode film layer has the meaning known in the art and can be detected by using devices and methods known in the art. For example, by soaking the negative electrode plate in a solvent such as water to separate the negative electrode active material from the negative electrode current collector, performing suction filtration to obtain the negative electrode active material, using the inductively coupled plasma optical emission spectrometer, with the model ICAP7400, of Thermo Fisher Scientific Inc., USA, to conduct detection on the negative electrode active material, and referring to the GB/T30902-2014 standard, the mass content of the silicon element can be obtained.

In some embodiments, the negative electrode film layer further optionally includes a negative electrode conductive agent. The embodiments of the present application do not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber. In some embodiments, the mass percentage of the negative electrode conductive agent in the negative electrode film layer is ≤ 5 wt%.

In some embodiments, the negative electrode film layer further optionally includes a negative electrode binder. The embodiments of the present application do not particularly limit the type of the negative electrode binder. As an example, the negative electrode binder may include at least one of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, the mass percentage of the negative electrode binder in the negative electrode film layer is ≤ 5%.

In some embodiments, the negative electrode film layer further optionally includes other auxiliary agents. As an example, other auxiliary agents may include a thickener, such as sodium carboxymethylcellulose (CMC-Na) or a PTC thermistor material. In some embodiments, the mass percentage of the other auxiliary agents in the negative electrode film layer is ≤ 2 wt%.

In some embodiments, the material of the positive electrode current collector may be aluminum, and the material of the negative electrode current collector may be copper.

In some embodiments, the separator includes a separation film. The present application does not particularly limit the type of the separation film, and any porous-structure separation film known to have good chemical stability and mechanical stability may be selected and used.

The embodiments of the present application do not particularly limit the type of the separation film, and any porous-structure separation film known to have good chemical stability and mechanical stability may be selected and used.

In some embodiments, the material of the separation film may include one or more of glass fiber, non-woven fabric, polyethylene, polypropylene, and polyvinylidene fluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the separation film may include a porous base film and a coating disposed on at least one side of the porous base film, and the coating may include at least one of inorganic particles or organic particles.

The porous base film may include one or more of polyethylene and polypropylene.

The inorganic particles have relatively good heat resistance and can improve the overall heat resistance of the separation film. When within the operating voltage range of the sodium-ion battery, the inorganic particles basically do not undergo oxidation reactions and reduction reactions with metal dendrites. In other words, the inorganic particles are configured to not undergo oxidation reactions and reduction reactions with the alkali metal and/or alkaline earth metal at a nominal voltage of the sodium-ion battery.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyesters (e.g., polyethylene terephthalate, polyethylene naphthalate, and polybutylene terephthalate), polyphenylene sulfide, polyaramide, polyamideimide, polyimide, a copolymer of butyl acrylate and ethyl methacrylate, and a mixture thereof.

In some embodiments, the pouch battery cell 10 further includes an electrolytic solution.

During the charging and discharging process of the battery cell, active ions are intercalated and deintercalated back and forth between the positive electrode plate and the negative electrode plate, and the electrolytic solution serves to conduct the active ions between the positive electrode plate and the negative electrode plate. The embodiments of the present application do not particularly limit the type of the electrolytic solution, and a choice can be made as needed in practice.

The electrolytic solution includes an electrolyte salt and a solvent. The types of the electrolyte salt and the solvent are not particularly limited, and a choice can be made as needed in practice.

In some embodiments, the electrolytic solution further optionally includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

For example, the additive includes at least one of a cyclic carbonate compound containing unsaturated bonds, a sulfate compound, a sulfite compound, a sultone compound, a disulfonic acid compound, a nitrile compound, an aromatic compound, an isocyanate compound, a phosphazene compound, anhydride, a cyclic anhydride compound, a phosphite compound, a phosphate compound, a borate, and a carboxylate compound.

In the related art, the wrapping shell 20 is disposed outside the plurality of pouch battery cells 10 and is configured to support the pouch battery cells 10. However, when thermal runaway occurs in the pouch battery cells 10, the wrapping shell 20 has difficulty in dissipating heat effectively. Additionally, the high-temperature gas-fire flow (high-temperature gas carrying solid particles or liquid) generated by thermal runaway will impact on the wrapping shell 20, such that the wrapping shell 20 can not effectively prevent the thermal diffusion, which poses potential safety hazards.

Based on this, the present application provides a battery apparatus 100, in which for the wrapping shell 20, the structural strength is higher, the wall thickness is more reasonable, the heat dissipation effect is better, and the impact resistance is better, such that thermal diffusion can be effectively prevented, thereby reducing potential safety hazards and improving the reliability of the battery apparatus 100.

A battery apparatus 100 and an electric device 200 according to the embodiments of the present utility model are described below with reference to FIG. 1 to FIG. 6.

As shown in FIG. 2, the present application provides a battery apparatus 100. The battery apparatus 100 may include a case 40 and at least one battery set disposed in the case 40, and the battery set may include a plurality of pouch battery cells 10 and a wrapping shell 20.

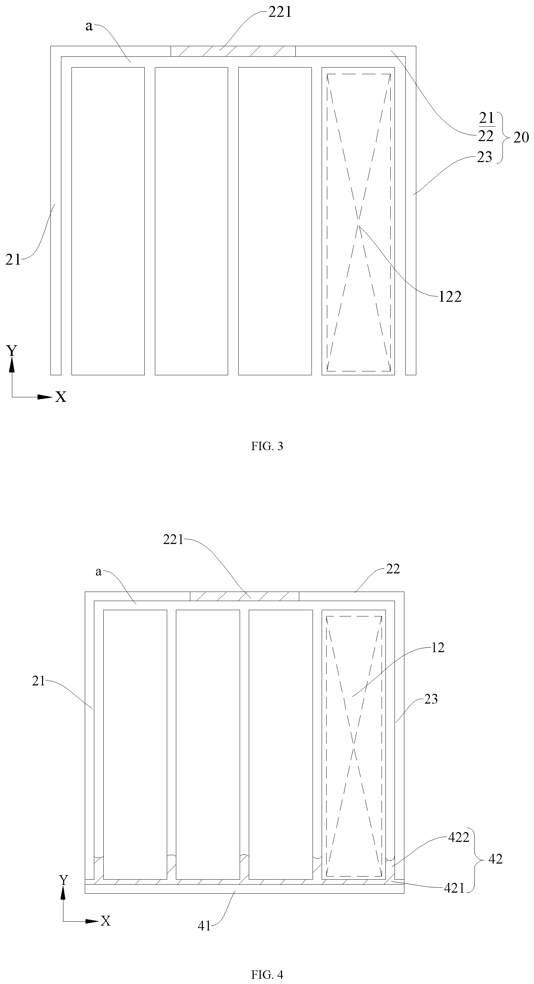

As shown in FIG. 3 and FIG. 4, the plurality of pouch battery cells 10 are sequentially stacked and electrically connected; the wrapping shell 20 is wrapped outside the plurality of pouch battery cells 10, and the wrapping shell 20 is configured to restrain the plurality of pouch battery cells 10 at least from three directions.

That is, the wrapping shell 20 includes at least three plates, in which one plate restrains the plurality of pouch battery cells 10 in the first direction, and the other two plates are disposed opposite to each other to restrain the plurality of pouch battery cells 10 in the second direction that forms an included angle with the first direction. For example, one plate restrains the plurality of pouch battery cells 10 from the top or bottom in the height direction, and the other two plates restrain the plurality of pouch battery cells 10 from the left and right sides in the width direction, so as to restrain the plurality of pouch battery cells 10 from at least three directions, thereby improving the stability and reliability of the restraining of the pouch battery cells 10 by the wrapping shell 20, reducing the movement of the pouch battery cells 10, and enhancing the reliability and stability of the battery set.

Furthermore, the strength of the wrapping shell 20 is allowed to be higher than the strength of the flexible shell 11 of the pouch battery cell 10, that is, the pouch battery cell 10 is provided with the flexible shell 11, the electrode assembly 12 is disposed in the flexible shell 11, and the flexible shell 11 may be provided with weak parts 113, such that pressure relief protection can be realized when thermal runaway occurs in the pouch battery cell 10. By allowing the strength of the wrapping shell 20 to be higher than the strength of the flexible shell 11, the pressure relief protection can be performed through the weak parts 113 when thermal runaway occurs in the pouch battery cell 10, and meanwhile it can be ensured that there will be no structural damage (such as rupture or opening) to the wrapping shell 20 under the impact of the high-pressure gas-fire flow, such that the high-pressure gas-fire flow is restrained, by the wrapping shell 20, inside the wrapping shell 20.

It should be noted that the thickness of the plate of the wrapping shell 20 for restraining the plurality of pouch battery cells 10 is less than or equal to 5.2 mm and greater than or equal to 0.2 mm.

Illustratively, the thickness of the plate of the wrapping shell 20 for restraining the plurality of pouch battery cells 10 is 0.2 mm, 0.5 mm, 1 mm, 2 mm, 3 mm, 4 mm, 5 mm, 5.2 mm, or the like.

That is, the thickness of the plate of the wrapping shell 20 is 0.2 mm to 5.2 mm. In one aspect, this configuration can prevent the thickness of the plate from being too thin and improve the impact resistance of the wrapping shell 20, such that the wrapping shell 20 provides better wrapping and protection for the pouch battery cell 10; in another aspect, this configuration can prevent the thickness of the plate from being too thick and balance the material cost and the space occupied (that is, balance the production cost and the energy density).

Meanwhile, allowing the wall thickness of the wrapping shell 20 to be more reasonable can also improve the heat dissipation effect of the wrapping shell 20.

According to the battery apparatus 100 in the embodiments of the present application, by allowing the strength of the wrapping shell 20 to be higher than the strength of the flexible shell 11 and the thickness of the wrapping shell 20 to be more reasonable, in one aspect, the structural strength of the wrapping shell 20 can be improved, and the probability of structural damage after the wrapping shell 20 is impacted by the high-pressure gas-fire flow can be reduced, such that the heat diffusion of the pouch battery cell 10 is concentrated inside the wrapping shell 20, and thereby the probability of heat diffusion outside the wrapping shell 20 is reduced and the reliability of the battery apparatus 100 is enhanced, and in another aspect, the energy density of the battery apparatus 100 can also be taken into account, and the production cost of the battery apparatus 100 can be lowered.

According to some embodiments of the present application, the thickness of the plate of the wrapping shell 20 for restraining the plurality of pouch battery cells 10 is less than or equal to 3 mm and greater than or equal to 0.5 mm.

Specifically, the thickness of the plate of the wrapping shell 20 for restraining the plurality of pouch battery cells 10 is 0.5 mm to 3 mm. For example, the thickness of the plate is 0.5 mm, 1 mm, 1.5 mm, 2 mm, 2.5 mm, and 3 mm. As such, the thickness of the wrapping shell 20 is not greater than 3 mm to take the space occupied by the wrapping shell 20 into account and improve the energy density of the battery apparatus 100; in addition, the thickness of the plate is not less than 0.5 mm to ensure that the structural strength of the wrapping shell 20 can meet the usage requirements and reduce the probability of structural damage to the wrapping shell 20 under the impact of high-pressure gas-fire flow. The plate with a more reasonable thickness offers better heat dissipation effect and can ameliorate the heat concentration, so as to reduce the probability of the melting of wrapping shell 20 due to heat, improve the isolation of thermal runaway by the wrapping shell 20, and achieve higher reliability of the battery apparatus 100.

According to some embodiments of the present application, the thickness of the plate of the wrapping shell 20 for restraining the plurality of pouch battery cells 10 is less than or equal to 1 mm and greater than or equal to 0.6 mm.

Further, the thickness of the plate of the wrapping shell 20 for restraining the plurality of pouch battery cells 10 is 0.6 mm to 1 mm. For example, the thickness of the plate is 0.6 mm, 0.7 mm, 0.8 mm, 0.9 mm, or 1 mm. In one aspect, allowing the thickness of the plate to be greater than 0.6 mm can enable the heat dissipation effect of the plate to be taken into account while ensuring the structural strength, ameliorate the heat concentration of the plate, enhance the isolation of thermal runaway, and delay the diffusion of thermal runaway to the outside effectively; in another aspect, allowing the thickness of the plate to be less than 1 mm can reduce the material cost of the wrapping shell 20, which can lower the production cost, allow for more reasonable space occupation of the wrapping shell 20, and allow the energy density of the battery apparatus 100 to be taken into account as well.

According to some embodiments of the present application, the wrapping shell 20 is an aluminum shell, and the thickness of the plate of the wrapping shell 20 for restraining the plurality of pouch battery cells 10 is less than or equal to 1 mm and greater than or equal to 0.4 mm; or the wrapping shell 20 is a stainless steel shell, and the thickness of the plate of the wrapping shell 20 for restraining the plurality of pouch battery cells 10 is less than or equal to 1 mm and greater than or equal to 0.2 mm.

Specifically, in some embodiments, the wrapping shell 20 is an aluminum shell, and the thickness of the plate of the wrapping shell 20 is in a range of 0.4 mm to 1 mm; in some other embodiments, the wrapping shell 20 is a stainless steel shell, and the thickness of the plate of the wrapping shell 20 is in a range of 0.2 mm to 1 mm.

As such, the thickness of the plate varies depending on the material of the wrapping shell 20. When the wrapping shell 20 is configured as an aluminum member, the minimum thickness of the plate is allowed to be greater to reduce the probability of structural damage to the wrapping shell 20 after heat concentration and improve the reliability; when the wrapping shell 20 is configured as a stainless steel member, the minimum thickness of the plate is allowed to be smaller, and thus the space occupied by the wrapping shell 20 can be further reduced.

As shown in FIG. 3 and FIG. 4, according to some embodiments of the present application, the wrapping shell 20 includes a first plate 21, a second plate 22, and a third plate 23 sequentially connected in a bending mode, an opening is formed at a side of the first plate 21 and the third plate 23 facing away from the second plate 22, the wrapping shell 20 is connected to the case 40 of the battery apparatus 100 through the opening, and the first plate 21, the second plate 22, and the third plate 23 restrain the plurality of pouch battery cells 10 along three directions, respectively.

Specifically, the first plate 21 and the third plate 23 are disposed opposite to each other, and the second plate 22 is located at one ends of the first plate 21 and the third plate 23 on the same side, such that the other ends of the first plate 21 and the third plate 23 on the same side define an opening. The opening is configured to connect to the case 40, that is, the end surface of the first plate 21 and the end surface of the third plate 23 on a side distal to the second plate 22 are connected to the case 40, such that the pouch battery cells 10 are restrained from two opposite surfaces and one adjacent surface of the pouch battery cells 10 through the first plate 21, the second plate 22 and the third plate 23. In addition to improving the restraining effect on the pouch battery cells, this configuration enables the connection between the wrapping shell 20 and the case 40 and the connection between the pouch battery cells 10 and the case 40 to be on the same side, and thus the difficulty in assembly can also be reduced and the assembly efficiency can be improved.

It will be appreciated that allowing the thicknesses of the first plate 21 and the third plate 23 to satisfy the above dimension range can allow the space occupied by the battery set in the direction of the first plate 21 and the third plate 23 to be taken into account, and allowing the thickness of the second plate 22 to satisfy the above dimension range can allow the space occupied by the battery set in the direction of the second plate 22 to be taken into account.

As shown in FIG. 4, according to some embodiments of the present application, the first plate 21 and the third plate 23 restrain the plurality of pouch battery cells 10 from opposite directions.

Specifically, the first plate 21 and the third plate 23 are disposed opposite to each other. By restraining the pouch battery cells 10 from the opposite direction through the oppositely disposed first plate 21 and third plate 23, the movement of the pouch battery cells 10 can be reduced, and the stability and reliability of the immobilization of the battery set in the case 40 can be improved.

Illustratively, the first plate 21 and the third plate 23 may restrain and limit the pouch battery cells 10 in the width direction of the pouch battery cells 10, and the width direction of the pouch battery cell 10 may correspond to the width direction or the length direction of the battery apparatus 100, such that the pouch battery cells 10 can be limited in the width direction or the length direction of the battery apparatus 100, thereby reducing the movement of the battery set relative to the case 40 in the width direction or the length direction of the battery apparatus 100, and improving the stability and reliability of the battery apparatus 100.

As shown in FIG. 4 and FIG. 5, according to some embodiments of the present application, the second plate 22 restrains the plurality of pouch battery cells 10 in a direction perpendicular to the direction in which the first plate 21 or the third plate 23 restrains the plurality of pouch battery cells 10.

The two sides of the second plate 22 in the first direction are connected to the first plate 21 and third plate 23, respectively, to define an opening in the second direction, the surface of the pouch battery cell 10 on the side where the opening is located may be connected to the case 40, and the first direction is perpendicular to the second direction. Therefore, the pouch battery cells 10 are limited from two sides in the first direction by the first plate 21 and the third plate 23, and meanwhile the pouch battery cells 10 are limited from one end in the first direction by the second plate 22.

Illustratively, the second plate 22 may restrain and limit the pouch battery cells 10 in the height direction of the pouch battery cells 10, thereby reducing the jumping of the battery set relative to the case 40 in the height direction of the battery apparatus 100, and improving the stability and reliability of the battery apparatus 100.

As shown in FIG. 5, according to some embodiments of the present application, the first plate 21, the second plate 22, and the third plate 23 form two exposed openings on two sides of a third direction, respectively, each exposed opening is provided with a busbar member 30 for converging the plurality of pouch battery cells 10, and each busbar member 30 covers the corresponding exposed opening.

Specifically, the first plate 21 and third plate 23 are disposed opposite to each other in the first direction, the second plate 22 is located at one ends of the first plate 21 and third plate 23 on the same side in the second direction, and the first plate 21, the second plate 22, and the third plate 23 define two exposed openings on the two sides of the third direction, respectively, and two busbar members 30 are disposed on the two exposed openings, respectively. This configuration allows the space defined by the wrapping shell 20 for accommodating the pouch battery cells 10 to be isolated from the outside, and further, the isolation of thermal runaway can be improved and the speed of thermal runaway spreading can be slowed down effectively by setting the structural strength and thickness of the wrapping plate.

It should be noted that the first direction refers to the width direction of the pouch battery cell 10, the second direction refers to the height direction of the pouch battery cell 10, and the third direction refers to the length direction of the pouch battery cell 10.

As shown in FIG. 2, the battery apparatus 100 includes a case 40 and a battery set, and at least one battery set is provided. The battery set includes the pouch battery cell 10 and the wrapping shell 20 according to at least one of the above embodiments, and at least one side surface of the wrapping shell 20 is provided with a pressure relief part 221.

An accommodating space is formed in the case 40, one or more battery sets are disposed in the accommodating space, one or more pouch battery cells 10 are disposed inside the wrapping shell 20 of each battery set, and the pouch battery cell 10 is configured as the above pouch battery cell 10 with the flexible shell 11.

As shown in FIG. 4 and FIG. 6, according to some embodiments of the present application, the flexible shell 11 has a side surface 111 opposite to a large surface of the electrode assembly 12 and a circumferential surface 112 avoiding the large surface, the side surface 111 and/or the circumferential surface 112 is provided with weak parts 113, and the wrapping shell 20 is provided with a pressure relief part 221 at least partially opposite to the weak parts 113.

The wrapping shell 20 is at least configured to wrap at least one of a plurality of circumferential surfaces 112, as well as two side surfaces 111, of the pouch battery cell 10, the weak parts 113 are disposed on at least one circumferential surface 112 of the pouch battery cell 10, and the pressure relief part 221 is formed on at least one side surface of the wrapping shell 20; for example, the pressure relief part 221 is opposite to the weak parts 113, or the pressure relief part 221 is located on the first surface of the wrapping shell 20, the weak parts 113 are opposite to the second surface of the wrapping shell 20, and the first surface is adjacent to the second surface.

In this way, by providing the pressure relief part 221 cooperating with the weak parts 113 on the wrapping shell 20, the high-temperature gas-fire flow discharged via the weak parts 113 can be further released outwards through the pressure relief part 221 when thermal runaway occurs in the pouch battery cell 10, such that the directional discharge of the high-temperature gas-fire flow is achieved through the cooperation between the weak parts 113 and the pressure relief part 221, thereby improving the reliability of the battery apparatus 100.

As shown in FIG. 6, according to some embodiments of the present application, the second plate 22 is opposite to the side surface 111, and the area of the projected contour of the second plate 22 on the side surface 111 of the flexible shell 11 is smaller than or equal to the area of the side surface 111.

Specifically, the circumferential surface 112 is defined to include a first surface and a second surface opposite to the first surface. The first surface is opposite to the first plate 21, the second surface is disposed to be away from the first plate 21, the second surface is configured to connect to the case 40, the two sides of the first surface and the second surface are two side surfaces 111 of the pouch battery cell 10, respectively, the two ends of the first surface and the second surface are the other two circumferential surfaces 112 of the pouch battery cell 10, respectively, and the second plate 22 is opposite to the side surface 111, so as to limit the pouch battery cell 10 in the direction of the second plate 22. The area of the surface of the second plate 22 opposite to the side surface 111 may be less than or equal to the area of the side surface 111.

That is, in some embodiments, the size of the second plate 22 is the same as the size of the side surface 111; in some other embodiments, the size of the second plate 22 is smaller than the size of the side surface 111. In one aspect, this configuration can prevent the case that the second surface cannot be connected to the case 40 due to a too larger size of the second plate 22, thereby improving the stability and reliability of the immobilization of the battery set in the case 40; in another aspect, the material consumption of the second plate 22 can be less, which can also reduce the material cost of the battery set and the battery apparatus 100.

According to some embodiments of the present application, the battery apparatus 100 further includes the case 40, and end surfaces of the first plate 21 and the third plate 23 on a side distal to the second plate 22 are connected to the case 40 through an adhesive layer 42.

Specifically, the case 40 is provided with a bottom plate 41, and the bottom plate 41 is connected to the bottom surface (i.e., the second surface) of the pouch battery cell 10 and the end surfaces of the second plate 22 and the third plate 23 on a side facing the bottom plate 41 through the adhesive layer 42, such that the stability and reliability of the immobilization of the battery set is improved.

As shown in FIG. 5, according to some embodiments of the present application, the bottom plate 41 includes a cold plate, and the adhesive layer 42 is located between the cold plate and the plurality of pouch battery cells 10.

In some embodiments, the bottom plate 41 of the case 40 is formed as a cold plate, and the cold plate is connected to the pouch battery cell 10 through the adhesive layer 42; in other embodiments, the cold plate is disposed between the bottom plate 41 and the pouch battery cell 10, and the cold plate is connected to the pouch battery cell 10 through the adhesive layer 42.

That is, the adhesive layer 42 is configured as the structural adhesive, and the bottom plate 41 provided with the cold plate is connected to the pouch battery cell 10. On the premise that the battery set is stably and reliably fixed in the case 40, the temperature of the battery set may be adjusted through the cold plate, such that the battery set can operate at a proper temperature, thereby improving the operating stability and reliability of the battery set, reducing the probability of overheating of the battery set and thereby reducing the probability of thermal runaway of the battery set, and enhancing the reliability of the battery set and even the battery apparatus 100.

As shown in FIG. 5, according to some embodiments of the present application, the adhesive layer 42 includes an adhesive layer body 421 and an adhesive overflow part 422. The adhesive overflow part 422 is located on the adhesive layer body 421 on a side facing the plurality of pouch battery cells 10, and is located between adjacent pouch battery cells 10, and/or between the pouch battery cells 10 and the first plate 21, and/or between the pouch battery cells 10 and the third plate 23.

That is, when the structural adhesive is used for connecting and fixing the pouch battery cells 10 and the cold plate, at least a part of the adhesive layer 42 overflows into the space between the adjacent pouch battery cells 10, and/or between the pouch battery cell 10 and the first plate 21, and/or between the pouch battery cell 10 and the third plate 23, and is formed as an adhesive overflow part 422. Providing the adhesive overflow part 422 not only can increase the area between the adhesive layer 42 and the pouch battery cell 10, between the adhesive layer 42 and the first plate 21, and between the adhesive layer and the second plate 22 to improve the fixing stability and reliability of the battery set on the case 40, but also can limit the pouch battery cells 10 and the wrapping shell 20 by filling the gaps between the adjacent pouch battery cells 10 and between the pouch battery cell 10 and the second plate 22 with the adhesive overflow part 422, thus reducing the movement of the battery set in the case 40 and reducing the movement of the pouch battery cells 10 in the wrapping shell 20.

The first plate 21 and the third plate 23 are disposed on the two sides of the second plate 22, respectively, the second plate 22 of the wrapping shell 20 may be opposite to one circumferential surface 112 of the pouch battery cell 10, the first plate 21 and the third plate 23 may be opposite to the two side surfaces 111 of the pouch battery cell 10, respectively, and the weak parts 113 formed on the circumferential surface 112 may be at least partially opposite to the pressure relief part 221 formed on the second plate 22 (i.e., the pressure relief part 221 is formed on the second plate 22).

It should be noted that the weak part 113 being at least partially opposed to the pressure relief part 221 means that the weak part 113 formed on the circumferential surface 112 is projected toward the first plate 21, and the projection contour at least partially coincides with the contour of the pressure relief part 221.

In this way, in one aspect, the gas-fire flow generated after thermal runaway of the pouch battery cell 10 can be discharged directionally and orderly, so as to reduce the damage, especially secondary damage; in another aspect, the shorter communicating path between the weak part 113 and the pressure relief part 221 enables fast discharge, shorter retention duration of the gas-fire flow inside the wrapping shell 20, and less influence to other pouch battery cells 10 around the pouch battery cell 10 with thermal runaway, thereby further slowing down the speed of thermal runaway spreading, and improving the reliability of the battery set and battery apparatus 100.

As shown in FIG. 4 and FIG. 5, according to some embodiments of the present application, the second plate 22 is spaced apart from a side of the circumferential surface 112 provided with the pressure relief part 221 to define an exhaust channel a.

In this way, the high-temperature gas-fire flow generated after the rupture of the weak parts 113 can be firstly released to the exhaust channel a, and then discharged through the pressure relief part 221 after being primarily buffered through the exhaust channel a. This can lower the pressure of the high-temperature gas-fire flow after flowing out of the pressure relief part 221 and thereby reduce the impact on and damage to the pouch battery cell 10 after thermal runaway.

According to some embodiments of the present application, the second plate 22 is configured as a flat plate or an arc-shaped plate.

That is, in some embodiments, the second plate 22 is configured as a flat plate; in some other embodiments, the second plate 22 is configured as an arc-shaped plate.

According to some embodiments of the present application, a plurality of pressure relief parts 221 are provided, and the plurality of pressure relief parts 221 are spaced apart from each other in the length direction and/or the width direction of the second plate 22.

Therefore, the plurality of weak parts 113 on each pouch battery cell 10 can each be provided with a corresponding pressure relief part 221, such that high-temperature gas-fire flow buffered through the exhaust channel a can be directly discharged through the corresponding pressure relief part 221, thereby increasing the discharge speed, reducing the retention duration of the high-temperature gas-fire flow in the exhaust channel a in the discharge process, slowing down the speed of thermal runaway spreading between adjacent pouch battery cells 10 in the battery set, and improving the reliability of the battery set.

According to some embodiments of the present application, the total power of the plurality of pouch battery cells 10 in a single wrapping shell 20 is less than 0.9 kWh, and the energy density of the plurality of pouch battery cells 10 in the single wrapping shell 20 satisfies: L ≤ 450 Wh/L.

In this way, in the embodiment where the total power in a single wrapping shell 20 is less than 0.9 KWh, the energy density of the plurality of pouch battery cells 10 in the single wrapping shell 20 should be less than or equal to 450 Wh/L, such that the reliability can be improved, the speed of thermal runaway spreading between adjacent wrapping shells 20 can be reduced, and the number of the pouch battery cells 10 in the wrapping shell 20 can be more reasonable while taking the space occupied into account.

According to some embodiments of the present application, the total power of the plurality of pouch battery cells 10 in a single wrapping shell 20 is less than 0.72 kWh, and the energy density of the plurality of pouch battery cells 10 in the single wrapping shell 20 satisfies: 450 Wh/L < L ≤ 600 Wh/L.

In this way, in the embodiment where the total power in a single wrapping shell 20 is less than 0.72 KWh, the energy density of the plurality of pouch battery cells 10 in the single wrapping shell 20 should be greater than 450 Wh/L and less than or equal to 600 Wh/L, such that the reliability can be improved, the speed of thermal runaway spreading between adjacent wrapping shells 20 can be reduced, and the number of the pouch battery cells 10 in the wrapping shell 20 can be more reasonable while taking the space occupied into account.

According to some embodiments of the present application, the total power of the plurality of pouch battery cells 10 in a single wrapping shell 20 is less than 0.6 kWh, and the energy density of the plurality of pouch battery cells 10 in the single wrapping shell 20 satisfies: 600 Wh/L < L ≤ 700 Wh/L.

In this way, in the embodiment where the total power in a single wrapping shell 20 is less than 0.6 KWh, the energy density of the plurality of pouch battery cells 10 in the single wrapping shell 20 should be greater than 600 Wh/L and less than or equal to 700 Wh/L, such that the reliability can be improved, the speed of thermal runaway spreading between adjacent wrapping shells 20 can be reduced, and the number of the pouch battery cells 10 in the wrapping shell 20 can be more reasonable while taking the space occupied into account.

According to some embodiments of the present application, the total power of the plurality of pouch battery cells 10 in a single wrapping shell 20 is less than 0.48 kWh, and the energy density of the plurality of pouch battery cells 10 in the single wrapping shell 20 satisfies: L > 700 Wh/L.

In this way, in the embodiment where the total power in a single wrapping shell 20 is less than 0.48 KWh, the energy density of the plurality of pouch battery cells 10 in the single wrapping shell 20 should be greater than 700 Wh/L, such that the reliability can be improved, the speed of thermal runaway spreading between adjacent wrapping shells 20 can be reduced, and the number of the pouch battery cells 10 in the wrapping shell 20 can be more reasonable while taking the space occupied into account.

It should be noted that the test conditions for the embodiments of the present application are as follows: Two adjacent battery sets are disposed in the confined space of the case of a simulated battery apparatus, thermal runaway (for example, thermal runaway is triggered by short circuit) occurs in one of the battery sets, and the other battery set is in the normal state; the thicknesses of the plates of the wrapping shells 20 of the two battery sets for restraining the pouch battery cells 10 are the same (the minimum value, 0.2 mm), and the total power of the plurality of pouch battery cells 10 in the two battery sets is the same; in addition, for two adjacent battery sets, the allowable time threshold of thermal runaway of one battery set resulting in thermal runaway of another battery set is set based on the national standard (for example, according to the national standard GB 38031, the battery apparatus 100 should not be ignited within five minutes after thermal runaway occurs in the battery cell; on this basis, the allowable time threshold can be set to 5 minutes). As such, whether the time the normal battery set 10 takes to have thermal runaway after being influenced by the thermal runaway spreading reaches or exceeds the allowable time threshold is determined for the adjacent battery sets 10, and the case where the allowable time threshold is reached or exceeded is defined as not diffused, so as to determine the energy density limit value of the pouch battery cells in the battery set under this total power, and the total power is further adjusted to determine the corresponding energy density limit values under different total power and thereby determine the relationship between the total power of the plurality of pouch battery cells 10 in a single wrapping shell 20 and the energy density of the pouch battery cells 10.

Illustratively, in the specific embodiment where the pouch battery cell 10 has a length of 355 mm, a width of 13.8 mm, and a height of 123 mm, and the thickness of the plate of the wrapping shell 20 for restraining the plurality of pouch battery cells 10 is 0.2 mm, the thermal diffusion conditions under the same energy density and different internal power are as follows:

| | Energy density (Wh/L) | Energy density (kWh) | Thermal diffusion |
|---|---|---|---|
| Example 1 | 450 | 0.72 | Not diffused |
| Comparative Example 1 | 450 | 0.9 | Diffused |
| Example 2 | 600 | 0.6 | Not diffused |
| Comparative Example 2 | 600 | 0.72 | Diffused |
| Example 3 | 650 | 0.6 | Not diffused |
| Comparative Example 3 | 650 | 0.66 | Diffused |
| Example 4 | 700 | 0.48 | Not diffused |
| Comparative Example 4 | 700 | 0.54 | Not diffused |

In summary, in the present application, based on the total power of the plurality of pouch battery cells 10 in each battery set, the energy density of the pouch battery cells 10 is reasonably set. For example, when the energy density is less than or equal to 450 Wh/L, the total power should be less than 0.9 KWh; when the energy density is in the range of 450 Wh/L < L ≤ 600 Wh/L, the total power should be less than 0.72 KWh; when the energy density is in the range of 600 Wh/L < L ≤ 700 Wh/L, the total power should be less than 0.6 KWh; when the energy density is greater than 700 Wh/L, the total power should be less than 0.48 KWh.

Therefore, as can be known from the above table, by setting the corresponding relationship between the total power and the energy density reasonably, the thermal runaway suppression effect can be improved when thermal runaway occurs in the pouch battery cell 10 in the battery set, the speed of the thermal runaway spreading can be reduced, and the reliability can be enhanced.

As shown in the drawings, the pouch battery cell 10 in the embodiments of the present application is configured as the pouch battery cell 10, the electrode assembly 12 is disposed in the flexible shell 11, and the weak parts 113 are formed on at least the circumferential surface 112 of the flexible shell 11; the battery set includes at least one pouch battery cell 10 according to the embodiment of the present application, the pressure relief part 221 on the first plate 21 of the wrapping shell 20 is at least partially opposite to the weak parts 113, and the second plate 22 is opposite to the side surface 111 of the flexible shell 11; the bottom plate 41 of the case 40 is configured as the cold plate or the bottom plate 41 is provided thereon with the cold plate, the cold plate is connected to the pouch battery cell 10 through the adhesive layer 42, and the adhesive overflow part 422 of the adhesive layer 42 overflows into the space between adjacent pouch battery cells 10 and/or between the pouch battery cell 10 and the second plate 22.

According to some embodiments of the present application, the pouch battery cell 10 is any one of a lithium iron phosphate battery cell, a ternary lithium battery cell, and a solid-state battery cell.

That is, in some embodiments, the pouch battery cell 10 is configured as a lithium iron phosphate battery; in some embodiments, the pouch battery cell 10 is configured as a ternary lithium battery cell; in some embodiments, the pouch battery cell 10 is configured as a solid-state battery cell.

The solid-state battery cell may be, but is not limited to, a polymer solid-state battery cell, an oxide solid-state battery cell, a sulfide solid-state battery cell, a halide solid-state battery cell, and the like. The solid-state battery cell may also be a semisolid-state battery cell or an all-solid-state battery cell.

In the above technical solution, in the embodiment of the present application where the pouch battery cell is configured as a lithium iron phosphate battery cell, the reliability of the pouch battery cell can be improved, and the cycle life of the pouch battery cell can be extended; in the embodiment of the present application where the pouch battery cell is configured as a ternary lithium battery cell, the energy density and endurance mileage of the pouch battery cell can be increased; in the embodiment of the present application where the pouch battery cell is configured as a solid-state pouch battery cell, the energy density can be improved, and the reliability can be enhanced as well.

According to some embodiments of the present application, when the pouch battery cell 10 is a lithium iron phosphate (LiFeO₄) battery cell, in the positive electrode material of the pouch battery cell 10, the amount ratio of the positive electrode active material, the positive electrode binder, and the positive electrode conductive agent is 96:1-3:1-3; when the pouch battery cell 10 is a ternary lithium battery cell, in the positive electrode material of the pouch battery cell 10, the amount ratio of the positive electrode active material, the positive electrode binder, and the positive electrode conductive agent is 96:2-3:1-2.

It will be appreciated that when the pouch battery cell 10 is a lithium iron phosphate battery cell, in the positive electrode material of the pouch battery cell 10, the positive electrode active material accounts for 96 parts of the total weight of the positive electrode material, the binder accounts for 1-3 (for example, it may include, but is not limited to, 1, 1.2, 1.5, 1.8, 2, 2.2, 2.5, 2.8, 3, etc.) parts of the total weight of the positive electrode material, and the conductive agent accounts for 1-3 (for example, it may be, but is not limited to, 1, 1.2, 1.5, 1.8, 2, 2.2, 2.5, 2.8, 3, etc.) parts of the total weight of the positive electrode material.

Illustratively, when the pouch battery cell 10 is a lithium iron phosphate battery cell, the positive electrode active material is LFP (which may refer to LiFePO₄, i.e., lithium iron phosphate), the binder may be PVDF (polyvinylidene fluoride), and the conductive agent may be conductive carbon black. The ratio of LFP:PVDF:conductive carbon black may be 96:2:2; that is, the total weight of the positive electrode active material is divided into 100 parts, in which LFP accounts for 96 parts, PVDF accounts for 2 parts, and the conductive carbon black accounts for 2 parts. The weight of the positive electrode active material may be measured in grams.

When the pouch battery cell 10 is a ternary battery cell, in the positive electrode material of the pouch battery cell 10, the positive electrode active material accounts for 96 parts of the total weight of the positive electrode material, the binder accounts for 2-3 (for example, it may include, but is not limited to, 2, 2.2, 2.5, 2.8, 3, etc.) parts of the total weight of the positive electrode material, and the conductive agent accounts for 1-2 (for example, it may include, but is not limited to, 1, 1.2, 1.5, 1.8, 2, etc.) parts of the total weight of the positive electrode material. The ternary battery cell may be, but is not limited to, lithium nickel cobalt manganate-based materials, lithium nickel cobalt aluminate-based materials, and the like.

Illustratively, the ternary material of the ternary battery cell may be eight-series LiNi_{0.8}Co_{0.1}Mn_{0.1}O₂, and the ratio of the weight parts of the positive electrode active material, the binder, and the conductive agent is 96:2.5:1.5, that is, the total weight of the positive electrode material is divided into 100 parts, in which the eight-series LiNi_{0.8}Co_{0.1}Mn_{0.1}O₂ accounts for 96 parts, the binder accounts for 2.5 parts, and the conductive agent accounts for 1.5 parts.

In the above technical solution, when the pouch battery cell 10 is a lithium iron phosphate battery cell, the high proportion of the positive electrode active material means that a greater amount of electrochemically reactive materials may be accommodated within the limited electrode assembly, which is beneficial to increasing the capacity and energy density of the battery apparatus 100, such that the lithium iron phosphate battery cell can output a higher amount of electricity while maintaining relatively small volume and weight, making it suitable for application scenarios requiring a certain level of energy density. In addition, when the amounts of the binder and the conductive agent are within the aforementioned ranges, the cost of auxiliary materials can be reduced, thus reducing the overall cost of the battery apparatus 100. When the pouch battery cell 10 is a ternary battery cell, due to the relatively complex structure and surface properties of the ternary material, using the aforementioned ratio of the positive electrode active material, the binder, and the conductive agent ensures the firm bonding between the positive electrode active material particles and between the active material and the current collector, such that the mechanical stability and structural integrity of the electrode assembly are improved, and the risk of the active material detachment and electrode pulverization during the charging and discharging processes are reduced, thereby extending the cycle life of the battery apparatus 100.

As shown in FIG. 1, the present application provides an electric device 200. The electric device includes the battery apparatus 100 according to the above embodiments.

Further, as shown in FIG. 1, the electric device 200 may be a vehicle, and the battery apparatus 100 may be integrated on the chassis of the vehicle, that is, the vehicle body is configured as a split vehicle body, the upper vehicle body and the integrated intelligent chassis are assembled together, and the battery apparatus 100 is formed as a part of the integrated intelligent chassis, such that the top plate of the case 40 participates in defining the floor of the vehicle body, thereby avoiding the meaningless multi-layer stacking of plates, reducing the material cost, enabling more reasonable use of space of the chassis, increasing the space inside the chassis for accommodating the battery apparatus 100, and achieving higher energy density.

It will be appreciated that when the electric device 200 is configured as the vehicle, that is, the vehicle uses the above battery apparatus 100, the energy density of the battery apparatus 100 can be higher, and the reliability can be better, such that the driving safety of the vehicle can be improved while the endurance mileage of the vehicle is increased.

Other configurations and operations of the pouch battery cell 10, the battery apparatus 100, and the electric device 200 according to the embodiments of the present utility model are known to those of ordinary skill in the art and will not be described herein.

In the description of this specification, the description of reference terms "one embodiment", "some embodiments", "a schematic embodiment", "an example", "a specific example", or "some examples" and the like means that a particular feature, structure, material, or characteristic described in connection with the embodiments or examples is included in at least one embodiment or example of the present application. In the specification, the schematic description of the aforementioned terms does not necessarily refer to the same embodiment or example. Moreover, the specific feature, structure, material, or characteristic described may be combined in a suitable manner in any one or more embodiments or examples.

Although the embodiments of the present application have been illustrated and described, it will be appreciated by those of ordinary skill in the art that various changes, modifications, replacements, and variations can be made to these embodiments without departing from the principle and purpose of the present application, and the scope of the present application is defined by the claims and equivalents thereof.

## Claims

1. A battery apparatus (100), comprising:
a plurality of pouch battery cells (10), the plurality of pouch battery cells (10) being sequentially stacked and electrically connected; and
a wrapping shell (20), the wrapping shell (20) being wrapped outside the plurality of pouch battery cells (10), the wrapping shell (20) being configured to restrain the plurality of pouch battery cells (10) at least from three directions, and a strength of the wrapping shell (20) being higher than a strength of a flexible shell (11) of the pouch battery cell (10); wherein
a thickness of a plate of the wrapping shell (20) for restraining the plurality of pouch battery cells (10) is less than or equal to 5.2 mm and greater than or equal to 0.2 mm.

2. The battery apparatus (100) according to claim 1, wherein
the thickness of the plate of the wrapping shell (20) for restraining the plurality of pouch battery cells (10) is less than or equal to 3 mm and greater than or equal to 0.5 mm.

3. The battery apparatus (100) according to claim 1, wherein
the thickness of the plate of the wrapping shell (20) for restraining the plurality of pouch battery cells (10) is less than or equal to 1 mm and greater than or equal to 0.6 mm.

4. The battery apparatus (100) according to claim 1, wherein
the wrapping shell (20) is an aluminum shell, and the thickness of the plate of the wrapping shell (20) for restraining the plurality of pouch battery cells (10) is less than or equal to 1 mm and greater than or equal to 0.4 mm;
or,
the wrapping shell (20) is a stainless steel shell, and the thickness of the plate of the wrapping shell (20) for restraining the plurality of pouch battery cells (10) is less than or equal to 1 mm and greater than or equal to 0.2 mm.

5. The battery apparatus (100) according to any one of claims 1 to 4, wherein
the wrapping shell (20) comprises a first plate (21), a second plate (22), and a third plate (23) sequentially connected in a bending mode, and an opening is formed at a side of the first plate (21) and the third plate (23) facing away from the second plate (22); the wrapping shell (20) is connected to a case (40) of the battery apparatus (100) through the opening;
the first plate (21), the second plate (22), and the third plate (23) restrain the plurality of pouch battery cells (10) along three directions, respectively.

6. The battery apparatus (100) according to claim 5, wherein
the first plate (21) and the third plate (23) restrain the plurality of pouch battery cells (10) from opposite directions.

7. The battery apparatus (100) according to claim 6, wherein
the second plate (22) restrains the plurality of pouch battery cells (10) in a direction perpendicular to a direction in which the first plate (21) or the third plate (23) restrains the plurality of pouch battery cells (10).

8. The battery apparatus (100) according to any one of claims 5 to 7, wherein
the first plate (21), the second plate (22), and the third plate (23) form two exposed openings on two sides of a third direction, respectively, each of the exposed openings is provided with a busbar member (30) for converging the plurality of pouch battery cells (10), and each busbar member (30) covers a corresponding exposed opening.

9. The battery apparatus (100) according to any one of claims 5 to 8, wherein the battery apparatus (100) further comprises the case (40), and end surfaces of the first plate (21) and the third plate (23) on a side distal to the second plate (22) are connected to the case (40) through an adhesive layer (42).

10. The battery apparatus (100) according to claim 9, wherein the case (40) is provided with a bottom plate (41), and the bottom plate (41) is connected to the first plate (21) and the third plate (23) through the adhesive layer (42).

11. The battery apparatus (100) according to claim 10, wherein the bottom plate (41) is configured as a cold plate, and/or the bottom plate (41) has a cold plate provided on a side facing the plurality of pouch battery cells (10), and the adhesive layer (42) is located between the cold plate and the plurality of pouch battery cells (10).

12. The battery apparatus (100) according to claim 10, wherein the adhesive layer (42) comprises an adhesive layer body (421) and an adhesive overflow part (422), and the adhesive overflow part (422) is located on the adhesive layer body (421) on a side facing the plurality of pouch battery cells (10), and is located between adjacent pouch battery cells (10), and/or between the pouch battery cells (10) and the first plate (21), and/or between the pouch battery cells (10) and the third plate (23).

13. The battery apparatus (100) according to any one of claims 5 to 12, wherein the flexible shell (11) is provided with a side surface (111) opposite to a large surface of an electrode assembly (12) and a circumferential surface (112) avoiding the large surface, the side surface (111) and/or the circumferential surface (112) is provided with weak parts (113), and the wrapping shell (20) is provided with a pressure relief part (221) at least partially opposite to the weak parts (113).

14. The battery apparatus (100) according to claim 13, wherein the pressure relief part (221) is formed on the second plate (22).

15. The battery apparatus (100) according to claim 14, wherein the second plate (22) is spaced apart from a side of the circumferential surface (112) provided with the pressure relief part (221) to define an exhaust channel (a).

16. The battery apparatus (100) according to claim 15, wherein the second plate (22) is configured as a flat plate or an arc-shaped plate.

17. The battery apparatus (100) according to claim 15, wherein a plurality of pressure relief parts (221) are provided, and the plurality of pressure relief parts (221) are spaced apart from each other in a length direction and/or a width direction of the second plate (22).

18. The battery apparatus according to any one of claims 1 to 17, wherein a total power of the plurality of pouch battery cells (10) in a single wrapping shell (20) is less than 0.9 kWh, and an energy density of the plurality of pouch battery cells (10) in the single wrapping shell (20) satisfies: L ≤ 450 Wh/L.

19. The battery apparatus according to any one of claims 1 to 17, wherein a total power of the plurality of pouch battery cells (10) in a single wrapping shell (20) is less than 0.72 kWh, and an energy density of the plurality of pouch battery cells (10) in the single wrapping shell (20) satisfies: 450 Wh/L < L ≤ 600 Wh/L.

20. The battery apparatus according to any one of claims 1 to 17, wherein a total power of the plurality of pouch battery cells (10) in a single wrapping shell (20) is less than 0.6 kWh, and an energy density of the plurality of pouch battery cells (10) in the single wrapping shell (20) satisfies: 600 Wh/L < L ≤ 700 Wh/L.

21. The battery apparatus according to any one of claims 1 to 17, wherein
a total power of the plurality of pouch battery cells (10) in a single wrapping shell (20) is less than 0.48 kWh, and an energy density of the plurality of pouch battery cells (10) in the single wrapping shell (20) satisfies: L > 700 Wh/L.

22. The battery apparatus according to any one of claims 1 to 17, wherein the pouch battery cell (10) is any one of a lithium iron phosphate battery cell, a ternary lithium battery cell, and a solid-state battery cell.

23. The battery apparatus according to claim 22, wherein when the pouch battery cell (10) is a lithium iron phosphate battery cell, in a positive electrode material of the pouch battery cell (10), an amount ratio of a positive electrode active material, a positive electrode binder, and a positive electrode conductive agent is 96:1-3:1-3; when the pouch battery cell (10) is a ternary lithium battery cell, in a positive electrode material of the pouch battery cell (10), an amount ratio of a positive electrode active material, a positive electrode binder, and a positive electrode conductive agent is 96:2-3:1-2.

24. An electric device, comprising: the battery apparatus according to any one of claims 1 to 23.

25. The electric device according to claim 24, wherein the electric device is a vehicle.

26. The electric device according to claim 25, wherein the battery apparatus is integrated in a chassis of the vehicle, and a top plate of a case (40) participates in defining a floor of a vehicle body.
